# EUROPEAN PATENT SPECIFICATION

(11) **EP 2 818 304 B1**
(45) Date of publication and mention of the grant of the patent: **11.10.2017**
(21) Application number: 14173162.0
(22) Date of filing: 19.06.2014
(51) Int. Cl.: B29C 65/08

(54) **Supporting assembly**
Stützanordnung
Ensemble de support

(30) Priority: 26.06.2013 IT TO20130524
(43) Date of publication of application: 31.12.2014
(73) Proprietor: Soremartec S.A., 2632 Findel (LU); Ferrero S.p.A., 12051 Alba (Cuneo) (IT)
(72) Inventor: Grudzinski, Grzegorz, 00-193 Warszawa (PL)
(74) Representative: Frontoni, Stefano

(56) References cited:
- EP-A1- 0 344 137
- EP-A1- 0 658 336
- US-A- 3 649 421
- US-A1- 2012 145 330

## Description

### Field of the invention

The present invention relates to a supporting assembly intended for use in an ultrasonic welding machine. By the term "supporting assembly" is meant the supporting assembly of an ultrasonic welding machine, arranged on which are a first element and a second element to be welded together and against which said elements are pressed by the sonotrode of the welding machine.

The present invention regards in particular a supporting assembly comprising:
- a member for receiving said first and second elements, which has a contrast surface, set on which are said first and second elements to be pressed between said contrast surface and said sonotrode;
- a stationary base; and
- positioning means, set between said receiving member and said base, for orienting said contrast surface in space.

### General technical problem

The technique of ultrasonic welding requires that the parts that are to be connected together be pressed between the sonotrode and the contrast surface of the supporting assembly uniformly over their entire area of mutual coupling. However, possible deviations from the reference geometry of the parts to be connected, or else of the members of the welding machine itself, for example due to the tolerances of fabrication of said parts (process spread), or to the wear of the machine members, may prevent said condition from arising.

The positioning means referred to above enable orientation in space of the contrast surface of the supporting assembly so as to compensate for the geometrical deviations mentioned previously and to be able then to press the parts to be welded homogeneously over their entire coupling area.

A supporting assembly of the type referred to above is, for example, described in the European patent application No. EP0344137A1. In this supporting assembly, the positioning means are constituted by two surfaces with spherical geometry, between which it is possible to introduce air under pressure to form an air cushion designed to enable relative movement between the two surfaces substantially in the absence of friction. In this condition, the surfaces can be moved with respect to one another for adjusting the position of the supporting assembly. Once the correct position has been reached, the two surfaces are again brought into contact with one another, and the sonotrode then starts the welding operation.

Other supporting assemblies are disclosed by documents US2012/145330A1, EP0658336A1 and US3649421A.

### Object and summary of the invention

In the technical field in question, there is in any case still felt the need for a supporting assembly that not only will enable orientation of the contrast surface to compensate for the geometrical deviations referred to above, but also will be able to limit the force of pressure that can be exerted on said surface by the sonotrode, and that will at the same time be constructionally simple and easy to assemble.

The object of the present invention is to achieve at least one of the aforesaid purposes via a supporting assembly that has the characteristics recalled in Claim 1.

The claims form an integral part of the technical teaching provided herein in relation to the invention.

### Brief description of the drawings

The invention will now be described purely by way of non-limiting example with reference to the annexed drawings, wherein:
- Figure 1 is a perspective view of two supporting assemblies according to an embodiment of the present invention;
- Figure 1A illustrates an example of package that can be welded with the aid of the supporting assembly described herein;
- Figure 2 is an exploded perspective view of the supporting assemblies of Figure 1;

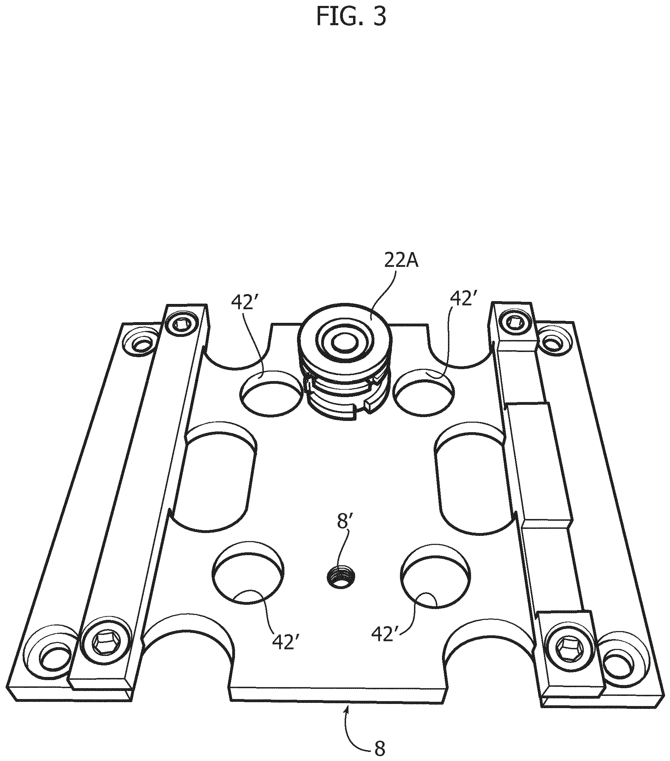

- Figure 3 is an axonometric view of the support of the supporting assemblies of Figure 1;
- Figure 4 is a top projection of an element of the positioning means of the supporting assembly described herein;
- Figures 5a and 5b illustrate, respectively according to a top projection and a lateral projection, the receiving member of the supporting assembly described herein;
- Figure 6 is a partially sectioned lateral projection of the supporting assembly described herein; and
- Figure 7 is an axonometric view from above of the two supporting assemblies of Figure 1 in a condition of extraction of the welded parts.

### Detailed description of the invention

In the ensuing description, various specific details are illustrated, aimed at providing an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are merely for convenience and hence do not define the sphere of protection or the scope of the embodiments.

With reference to the figures, the reference number 10 designates a supporting assembly intended for use in an ultrasonic welding machine in co-operation with a sonotrode 200 of said machine.

In general, the supporting assembly described herein comprises:
- a receiving member 2 for housing a first element and a second element to be connected together, which has a contrast surface 2A on which said elements set themselves to be pressed between said surface and the sonotrode;
- a stationary base 8; and
- positioning means set between said receiving member and said base for orienting said contrast surface in space.

It should be noted that the supporting assembly described herein can be used for any ultrasonic-welding application, given that it may be adapted to various uses, at the same time maintaining its essential characteristics, which will emerge clearly from what follows.

In any case, the supporting assembly described herein has been devised specifically for ultrasonic welding of thermoplastic packages.

In the above application, the two elements to be welded are usually two sheets of wrapping material, or a container and a film for closing the container, or a container and a lid, or again two half-shells, etc., which together form the package.

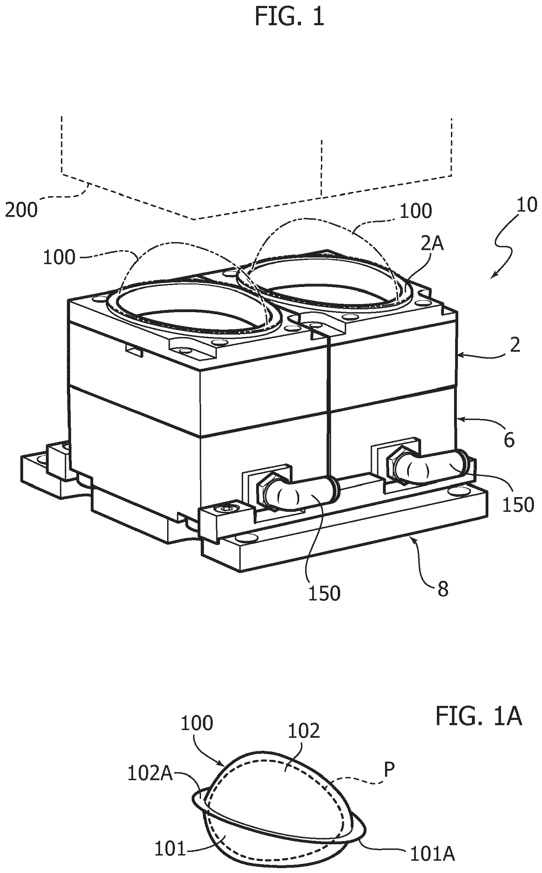

In this connection, Figure 1A illustrates, by way of example, a package 100 containing a product P, formed by a first half-shell 101 and a second half-shell 102, connected together at their peripheral mating flanges 101A, 102A, which are welded together using ultrasound technology. For the reasons that will emerge clearly from what follows, the use of the supporting assembly described herein proves particularly advantageous precisely in applications of this type, where the two elements to be connected together are welded along an area that extends according to a closed annular path.

The supporting assembly 10 illustrated in the figures is provided for being used in welding of the package 100 illustrated in Figure 1A.

In various embodiments, as in the one illustrated, the receiving member 2 has a prismatic body 4A, which has a cavity 4A' for housing one of the two elements to be welded, in the example illustrated the half-shell 101, set on which is the other element, in the example the half-shell 102. Fixed via screws on the body 4A is a plate 4B provided at the centre with an opening 4B' having a profile corresponding to that of the top mouth of the cavity 4A'. Around the opening 4B', the plate 4B has a raised edge, which defines at the top the contrast surface 2A of the supporting assembly. The parts to be welded together, in the example the flanges 101A, 102A, come to rest on this surface.

As mentioned above, the receiving member 2 is mounted on the base 8 via interposition of the positioning means.

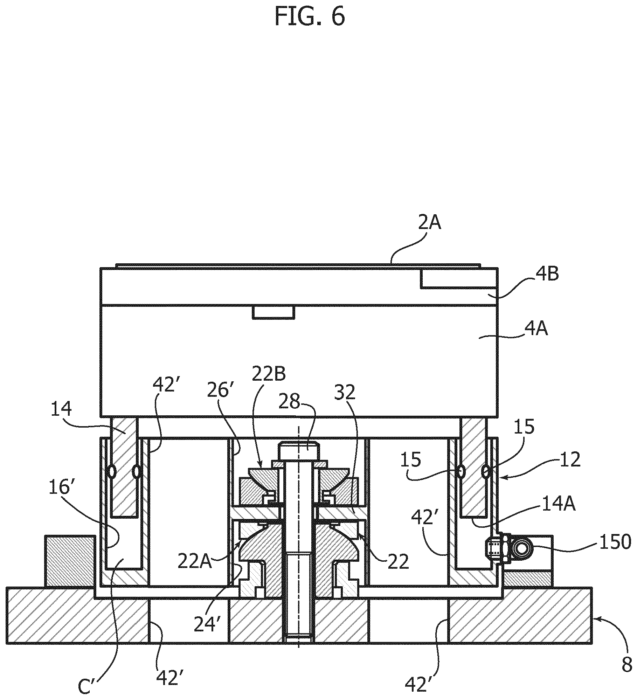

In general, the above positioning means comprise (see Figure 6):
- a supporting member 6 having a cylindrical chamber C', which is delimited by a wall 14A mobile in a direction parallel to, or coinciding with, the axial direction of said chamber and can be connected to pneumatic means so that the force of pressure exerted by the air on said mobile wall can counter the action of thrust of the sonotrode against the contrast surface 2A of the supporting assembly; and
- a connection member 22 having surfaces with spherical geometry, for orienting said direction of movement of said mobile wall with respect to said base or to said contrast surface; it is to be noted that the term "cylindrical" is used herein to identify any chamber that has a constant cross section throughout its height, whatever the specific shape of said cross section.

As will be described in greater detail in what follows, the positioning means described herein are able to exert a combined action of adjustment of the position of the contrast surface and of control of the force of pressure with which the sonotrode presses against said surface.

The present applicant has noted that the above combined action enables a considerable improvement in the quality of the seal obtained, above all in the cases where the sealing area runs along relatively extensive paths, such as the annular paths of the sealing area of the package illustrated in Figure 1A. The seal obtained is in fact characterized by a force of adhesion that is constant along the entire sealing area and lower than a predetermined value, thus ensuring, on the one hand, that the package will be completely closed, and, on the other, that the consumer can conveniently open the package by applying an equally constant and relatively contained force.

In various embodiments, as in the one illustrated, the supporting member comprises a block 12, constituted by a prismatic body which has a top side 12A facing the receiving member 2 and a bottom side 12B, facing the base 8. The top side 12A has a cylindrical cavity 16', which is engaged by a bottom portion 14 with corresponding geometry of the body 4A. The bottom face of the portion 14 constitutes the mobile wall 14A mentioned above and defines, together with the cavity 16', the cylindrical chamber C' of the positioning means described herein (see Figure 6).

The chamber in question can be connected, via a hole 18' made on a side wall of the block 12, to pneumatic means designed to introduce air under pressure into the chamber, of which only the connectors 150 are visible in the figures. As will be seen in what follows, the air under pressure has the task of exerting on the mobile wall 14A a force that counters the action of thrust of the sonotrode.

In various embodiments, as in the one illustrated, the bottom side 12B of the block 12 rests on the connection member 22, which in turn rests on the base 8. The connection member 22 enables the block 12 to orient the contrast surface 2A in space. It is to be noted that the centroid of the area of the mobile wall 14A is ideally connected to the geometrical centre of the spherical surfaces of the connection member 22 by a straight line that is parallel to the direction of movement of the mobile wall.

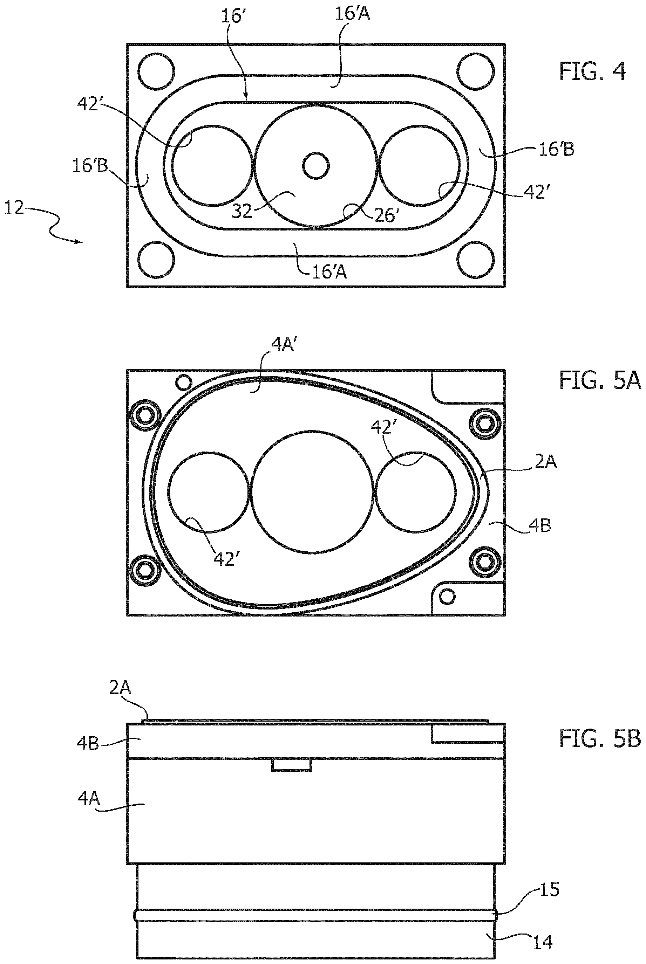

In particularly preferred embodiments, as in the one illustrated (see Figure 4), the cylindrical cavity 16' extends, in the direction orthogonal to its axial direction, along a closed annular path, preferably identified by two long rectilinear segments 16'A, parallel to the longitudinal walls of the block 12, and two opposed arcs of circumference 16'B, which connect between them the corresponding ends of the two segments 16'A. The bottom portion 14 of the body 4A has a tubular conformation with corresponding geometry.

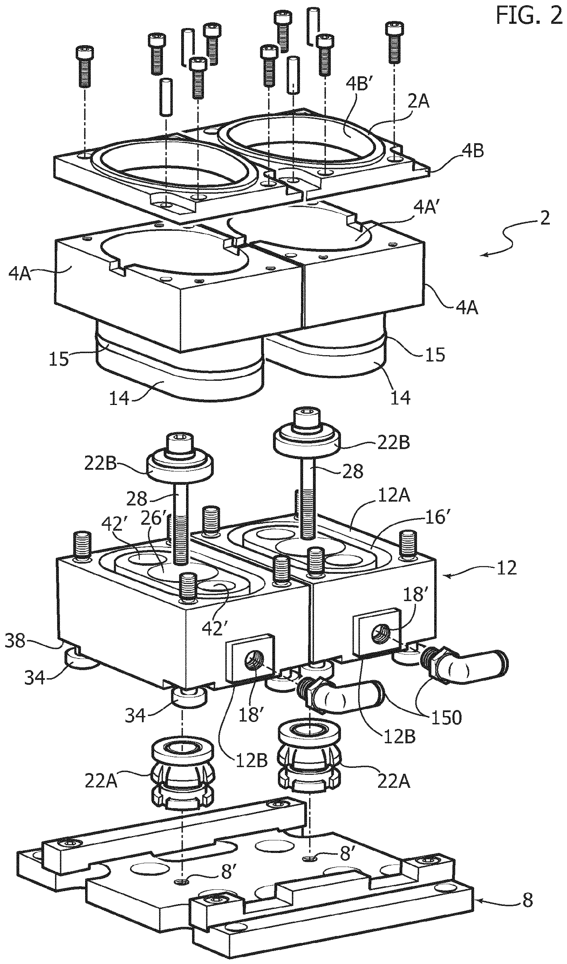

In various embodiments, as in the one illustrated (see Figures 2 and 6), the connection member 22 is formed by a first assembly 22A and a second assembly 22B, which are respectively associated to the bottom side 12B and the top side 12A of the block 12. In particular, the first assembly 22A is received in a central cavity 24' made on the bottom side 12B of the block 12, in a position that, in a cross-sectional view according to a horizontal plane, is internal to the annular shape defined by the cavity 16'. The second assembly 22B is, instead, received in a cavity 26' of the top side 12A, which is located in a position corresponding to the cavity 24'. The two cavities 24' and 26' identify together an inner wall 32 of the block 12, defining the bottom of both of the two cavities, which is perforated at the centre.

The two assemblies 22A and 22B of the connection member are perforated, and are traversed by a screw 28, the threaded end of which engages a threaded hole 8' made on the base 8, and the head of which presses, against the base 8, the ensemble constituted by the first and second assemblies 22A and 22B and by the wall 32 set between them. The wall 32 is thus gripped between the two assemblies 22A, 22B in such a way that the block 12 can follow only the movements of oscillation allowed by the member 22. In this connection, the first and second assemblies 22A and 22B both comprise a pair of elements in mutual contact at respective surfaces with spherical geometry, which can vary their relative position by sliding over one another along said surfaces. In both of the assemblies, one of the two elements is in contact with the wall 32, whereas the other element rests on the base 8, in the first assembly 22A, or is engaged by the head of the screw 28, in the second assembly 22B. Consequently, the wall 32 will follow the movement of the two elements that are in contact therewith with respect to the other two elements that are fixed with respect to the screw 28 and to the base 8.

Figure 2 is a schematic illustration of the mode of assemblage of the supporting assembly described herein. It should be noted that in the embodiment illustrated the base 8 is constituted by a single plate designed to support two distinct receiving members 2.

Assemblage of the supporting assembly envisages arranging the first assembly 22A of the connection member on the plate 8, and then mounting the block 12 on the assembly 22A, the second assembly 22B in the cavity 26' of the block 12, and then fixing this ensemble to the base 8 using the screw 28. The body 4A together with its plate 4B is then mounted on the block 12 by inserting the tubular portion 14 into the cavity 16'. The block 12 and the body 4A are finally connected via screws 34, which traverse the block 12 and engage, with their threaded ends, holes made on the bottom side of the body 4A. The screws 34 have a length such as to enable in any case, once screwed in said holes, a vertical movement of the body 4A with respect to the block 12 so that the wall 14A may thus be mobile within the cavity 16'; the end of travel of said movement is determined, at the bottom, by the body 4A that comes to bear upon the block 12, and, at the top, by the heads of the screws 34 that come to bear upon the bottom of seats 38 made in the block 12.

Operation of the supporting assembly described herein envisages introducing air at a given pressure into the cylindrical chamber of the block 12. The air under pressure raises the body 4A with respect to the block 12 by a distance that varies as the pressure of the air varies and that presents, as maximum limit, the end-of-travel position mentioned above. With the supporting assembly 10 in this condition, the sonotrode 200 drops, and comes to press the parts to be joined, in the example illustrated the flanges 101A, 102A of the two half-shells 101, 102, against the contrast surface 2A. In the event of misalignment between these parts and the sonotrode, the latter will initially come into contact only with the uppermost portions of the latter, and this will determine a movement of oscillation of the receiving member - which is possible thanks to the connection member 22 - that will lead to elimination of any misalignment.

Once in contact with the parts to be joined, the sonotrode starts to vibrate, generating heat in their area of interface and thus triggering the process of sealing of these parts.

During the entire welding operation, the cylindrical chamber C' is constantly kept under pressure, with the body 4A that floats thereon: consequently, any force of thrust exerted by the sonotrode higher than the countering force exerted by the air against the mobile wall 14A will determine lowering of the body 4A, thus rendering the action of pressure of the sonotrode ineffective.

By regulating the pressure of the air introduced into the chamber C', it is hence possible to establish the maximum pressure value above which the sonotrode is unable to operate. In this way, the force of adhesion between the welded parts can be controlled in a simple and completely reliable way.

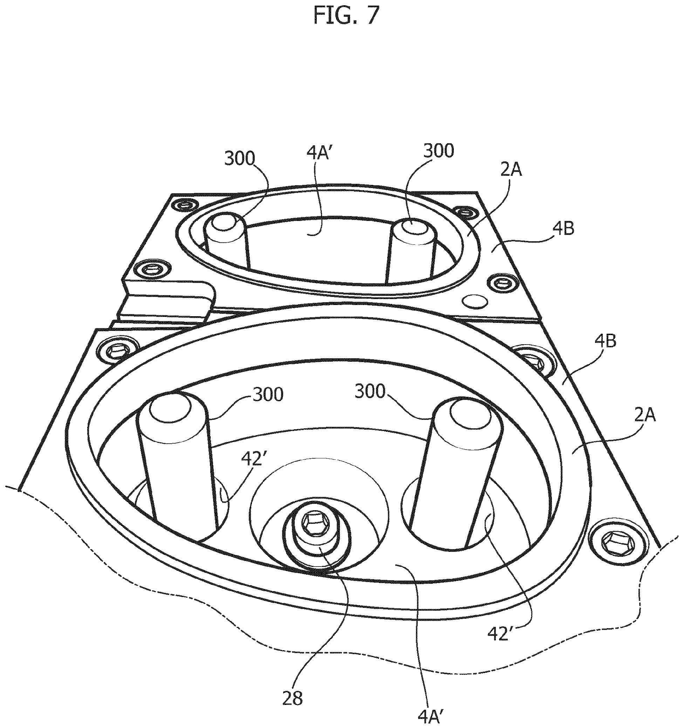

In preferred embodiments, the supporting assembly may moreover comprise one or more passages that traverse the entire assembly starting from the bottom side of the base 8 and give out into the cavity 4A' of the receiving member and that are identified by holes 42' made in each of the elements constituting the supporting assembly. These passages are to be traversed by extractor means of the welding machine (represented in Figure 7 as pins 300), which, at the end of the welding operation, move upwards within said passages to eject the package that has just been welded from the cavity 4A'. In preferred embodiments, as in the one illustrated, there are two such passages and they extend on opposite sides of the connection member 22, in positions within the annular path defined by the cavity 16'.

Of course, without prejudice to the principle of the invention, the details of construction and the embodiments may vary even significantly with respect to what has been illustrated herein purely by way of non-limiting example, without thereby departing from the scope of the invention as defined by the annexed claims.

In particular, the mutual arrangement of the supporting member and the connection member, which in the embodiments described above envisages that the connection member is in contact with the base and the supporting member is set above the connection member, may also vary and may, vice versa, envisage that the supporting member is in contact with the base and the connection member is set above the supporting member.

## Claims

1. A supporting assembly intended for use in an ultrasonic welding machine comprising a sonotrode designed to press a first element and a second element to be welded together against said supporting assembly,
said assembly comprising:
- a receiving member (2) for housing said first and second elements, which has a contrast surface (2A) on which said elements set themselves to be pressed between said contrast surface and said sonotrode;
- a stationary base (8); and
- positioning means set between said receiving member and said base, for orienting said contrast surface in space,
said assembly being **characterized in that** said positioning means comprise:
- a supporting member (6) having a cylindrical chamber (C'), which is delimited by a wall (14A) mobile in a direction parallel to, or coinciding with, the axial direction of said chamber and can be connected to pneumatic means so that the force of pressure exerted by the air on said mobile wall can counter the action of thrust of the sonotrode against said contrast surface (2A); and
- a connection member (22) having surfaces with spherical geometry, for orienting said direction of movement of said mobile wall with respect to said base or to said contrast surface.

2. The assembly according to Claim 1, wherein said wall (14A) is mobile between two end positions identified by respective end-of-travel surfaces fixed with respect to said base (6).

3. The assembly according to any one of the preceding claims, wherein said supporting member comprises a block (12) set between said receiving member (2) and said base (8), which has, on a first side, a cylindrical cavity (16'), and, on an opposite side, a seat (24') for housing said connection member (22), and wherein said supporting member comprises a body (14) having a shape corresponding to that of said cylindrical cavity, which engages said cavity (16') in a mobile way.

4. The assembly according to claim 3, wherein said cavity (16') extends, in the direction orthogonal to its axial direction, along a closed path, and wherein said seat for housing said connection member is set in a position corresponding to the internal area of said closed path.

5. The assembly according to Claim 4, wherein said closed path has an elongated annular shape.

6. The assembly according to Claim 5, wherein said closed path is identified by two long rectilinear segments (16'A) and by two opposed arcs of circumference (16'B), which connect together the corresponding ends of the two rectilinear segments (16' A) .

7. The assembly according to any one of Claims 3 to 5, wherein the top side (12A) of said block (12), facing said receiving member (2), has said cylindrical cavity (16'), and said receiving member has a bottom portion (14), which engages said cavity (16') and the bottom face of which defines said mobile wall (14A),
and wherein the bottom side (12B) of said block (12), facing said base (8), has said seat for housing said connection member.

8. The assembly according to Claim 7, wherein said cylindrical cavity (16') of said block (12) extends, in the direction orthogonal to its axial direction, along a closed path, and wherein said block (12) has a first housing cavity (26') and a second housing cavity (24'), respectively, on said top side (12A) and said bottom side (12B), which are located in a position corresponding to the internal area of said path and define an inner wall (32) of said block (12),
wherein said second housing cavity (24') identifies said housing seat and receives a first connection assembly (22A) of said member, which supports said block (12) keeping it in a raised position with respect to said base (8),
wherein said connection member comprises a second connection assembly (22B) received in said first housing cavity (26'), said first and second assemblies (22A, 22B) gripping said inner wall (32) between them, and
wherein said first and second assemblies (22A, 22B) both comprise a pair of elements in mutual contact on respective surfaces with spherical geometry, which can vary their relative position by sliding over one another along said surfaces.

## Patentansprüche

1. Stützanordnung zur Verwendung in einer Ultraschallschweißmaschine, die eine Sonotrode aufweist, die so ausgebildet ist, dass sie ein erstes Element und ein zweites Element, die miteinander verschweißt werden sollen, gegen die Stützanordnung drückt,
wobei die Anordnung aufweist:
- ein Aufnahmeelement (2) zur Aufnahme des ersten und zweiten Elements, das eine Gegenfläche (2A) aufweist, auf der sich die Elemente selbst setzen, um zwischen der Gegenfläche und der Sonotrode gedrückt zu werden;
- eine stationäre Basis (8); und
- Positioniereinrichtungen zwischen dem Aufnahmeelement und der Basis, zum Ausrichten der Gegenfläche im Raum,
die Anordnung ist dadurch charakterisiert, dass die Positioniereinrichtungen aufweisen:
- ein Stützelement (6), das eine zylindrische Kammer (C') aufweist, die durch eine Wand (14A) begrenzt wird, die beweglich in eine Richtung parallel zu oder übereinstimmend mit der axialen Richtung der Kammer ist und die mit einer pneumatischen Einrichtung verbunden werden kann, sodass die durch die Luft auf die bewegliche Wand ausgeübte Druckkraft gegen die Druckwirkung der Sonotrode gegen die Gegenfläche (2A) wirken kann; und
- ein Verbindungselement (22), das Oberflächen mit kugelförmiger Symmetrie aufweist, zum Ausrichten der Bewegungsrichtung der beweglichen Wand in Bezug auf die Basis oder auf die Gegenfläche.

2. Anordnung nach Anspruch 1, wobei die Wand (14A) zwischen zwei Endpositionen beweglich ist, die durch entsprechende Bewegungsendflächen, die fest mit der Basis (6) verbunden sind, identifiziert werden.

3. Anordnung nach einem der vorhergehenden Ansprüche, wobei das Stützelement einen Block (12) zwischen dem Aufnahmeelement (2) und der Basis (8) aufweist, der auf einer ersten Seite eine zylindrische Kavität (16') und auf einer gegenüberliegenden Seite einen Sitz (24') zur Aufnahme des Verbindungselements (22) aufweist, und wobei das Stützelement einen Körper (14) aufweist, der eine Form hat, die der der zylindrischen Kavität entspricht, und der in beweglicher Weise in die Kavität (16') eingreift.

4. Anordnung nach Anspruch 3, wobei sich die Kavität (16') in der Richtung senkrecht zu ihrer axialen Richtung entlang eines geschlossenen Pfads erstreckt, und wobei sich der Sitz zur Aufnahme des Verbindungselements in einer Position befindet, die dem inneren Bereich des geschlossenen Pfads entspricht.

5. Anordnung nach Anspruch 4, wobei der geschlossene Pfad eine längliche ringförmige Form hat.

6. Anordnung nach Anspruch 5, wobei der geschlossene Pfad durch zwei lange geradlinige Segmente (16'A) und durch zwei gegenüberliegende Umfangsbögen (16'B), die die entsprechenden Enden der zwei geradlinigen Segmente (16'A) miteinander verbinden, identifiziert wird.

7. Anordnung nach einem der Ansprüche 3 bis 5, wobei die Oberseite (12A) des Blocks (12), die dem Aufnahmeelement (2) zugewandt ist, die zylindrische Kavität (16') aufweist, und das Aufnahmeelement einen Bodenabschnitt (14) aufweist, der in die Kavität (16') eingreift und dessen Unterseite die bewegliche Wand (14A) definiert,
und wobei die Unterseite (12B) des Blocks (12), die der Basis (8) zugewandt ist, den Sitz zur Aufnahme des Verbindungselements aufweist.

8. Anordnung nach Anspruch 7, wobei sich die zylindrische Kavität (16') des Blocks (12) in der Richtung senkrecht zu ihrer axialen Richtung entlang eines geschlossenen Pfads erstreckt, und wobei der Block (12) eine erste Aufnahmekavität (26') und eine zweite Aufnahmekavität (24') auf der Oberseite (12A) beziehungsweise der Unterseite (12B) aufweist, die in einer Position angeordnet sind, die dem inneren Bereich des Pfads entspricht, und die eine innere Wand (32) des Blocks (12) definieren,
wobei die zweite Aufnahmekavität (24') den Aufnahmesitz identifiziert und eine erste Verbindungsanordnung (22A) des Elements aufnimmt, die den Block (12) unterstützt, indem sie ihn in einer angehobenen Position in Bezug auf die Basis (8) hält,
wobei das Verbindungselement eine zweite Verbindungsanordnung (22B) aufweist, die in der ersten Aufnahmekavität (26') aufgenommen wird, wobei die erste und zweite Anordnung (22A, 22B) die innere Wand (32) zwischen sich greifen, und
wobei die erste und zweite Anordnung (22A, 22B) beide ein Paar von Elementen in gegenseitigem Kontakt auf entsprechenden Oberflächen mit kugelförmiger Symmetrie aufweisen, die ihre relative Position durch Gleiten übereinander entlang der Oberflächen variieren können.

## Revendications

1. Ensemble de support destiné à être utilisé dans une machine de soudage par ultrasons comprenant une sonotrode conçue pour presser un premier élément et un deuxième élément à souder ensemble contre ledit ensemble de support,
ledit ensemble comprenant :
- un élément de réception (2) destiné à loger lesdits premier et deuxième éléments, qui a une surface de contraste (2A) sur laquelle lesdits éléments se fixent pour être pressés entre ladite surface de contraste et ladite sonotrode ;
- une base fixe (8) ; et
- des moyens de positionnement placés entre ledit élément de réception et ladite base, pour orienter dans l'espace ladite surface de contraste,
ledit ensemble étant **caractérisé en ce que** lesdits moyens de positionnement comprennent :
- un élément de support (6) ayant une chambre cylindrique (C'), qui est délimitée par une paroi (14A) mobile dans une direction parallèle à, ou qui coïncide avec, la direction axiale de ladite chambre et qui peut être reliée à des moyens pneumatiques de sorte que la force de pression exercée par l'air sur ladite paroi mobile puisse contrer l'action de poussée de la sonotrode contre ladite surface de contraste (2A) ; et
- un élément de liaison (22) ayant des surfaces de géométrie sphérique, pour orienter ladite direction de mouvement de ladite paroi mobile par rapport à ladite base ou ladite surface de contraste.

2. Ensemble selon la revendication 1, dans lequel ladite paroi (14A) est mobile entre deux positions terminales identifiées par des surfaces de fin de course respectives fixées par rapport à ladite base (6).

3. Ensemble selon l'une quelconque des revendications précédentes, dans lequel ledit élément de support comprend un bloc (12) placé entre ledit élément de réception (2) et ladite base (8), qui comporte, sur un premier côté, une cavité cylindrique (16'), et, sur un côté opposé, un siège (24') destiné à loger ledit élément de liaison (22), et dans lequel ledit élément de support comprend un corps (14) ayant une forme correspondant à celle de ladite cavité cylindrique, qui vient en prise de manière mobile avec ladite cavité (16').

4. Ensemble selon la revendication 3, dans lequel ladite cavité (16') se prolonge, dans la direction perpendiculaire à sa direction axiale, le long d'un trajet fermé, et dans lequel ledit siège destiné à loger ledit élément de liaison est placé dans une position correspondant à la zone intérieure dudit trajet fermé.

5. Ensemble selon la revendication 4, dans lequel ledit trajet fermé a une forme annulaire allongée.

6. Ensemble selon la revendication 5, dans lequel ledit trajet fermé est identifié par deux longs segments rectilignes (16'A) et par deux arcs de circonférence opposés (16'B), qui relient les extrémités correspondantes des deux segments rectilignes (16'A) entre elles.

7. Ensemble selon l'une quelconque des revendications 3 à 5, dans lequel le côté supérieur (12A) dudit bloc (12), faisant face audit élément de réception (2), comporte ladite cavité cylindrique (16'), et ledit élément de réception possède une partie inférieure (14), qui vient en prise avec ladite cavité (16') et dont la face inférieure définit ladite paroi mobile (14A),
et dans lequel le côté inférieur (12B) dudit bloc (12), faisant face à ladite base (8), comporte ledit siège destiné à loger ledit élément de liaison.

8. Ensemble selon la revendication 7, dans lequel ladite cavité cylindrique (16') dudit bloc (12) se prolonge, dans la direction perpendiculaire à sa direction axiale, le long d'un trajet fermé, et dans lequel ledit bloc (12) comporte une première cavité de logement (26') et une deuxième cavité de logement (24'), respectivement, sur ledit côté supérieur (12A) et ledit côté inférieur (12B), qui sont situées dans une position correspondant à la zone intérieure dudit trajet et définissent une paroi interne (32) dudit bloc (12),
dans lequel ladite deuxième cavité de logement (24') identifie ledit siège de logement et reçoit un premier ensemble de liaison (22A) dudit élément, qui supporte ledit bloc (12) en le gardant dans une position élevée par rapport à ladite base (8),
dans lequel ledit élément de liaison comprend un deuxième ensemble de liaison (22B) reçu dans ladite première cavité de logement (26'), lesdits premier et deuxième ensembles (22A, 22B) serrant ladite paroi interne (32) entre eux, et
dans lequel lesdits premier et deuxième ensembles (22A, 22B) comprennent tous deux une paire d'éléments en contact mutuel sur des surfaces respectives de géométrie sphérique, qui peuvent faire varier leur position relative en glissant l'un sur l'autre le long desdites surfaces.
